**Europäisches Patentamt**

**European Patent Office**

**Office européen des brevets**

(19)

(11) Veröffentlichungsnummer: **0 059 992**

**A1**

(12) # EUROPÄISCHE PATENTANMELDUNG

(21) Anmeldenummer: **82200162.4**

(22) Anmeldetag: **12.02.82**

(51) Int. Cl.³: **B 23 F 9/10**

(30) Priorität: **10.03.81 CH 1608/81**

(43) Veröffentlichungstag der Anmeldung:
**15.09.82 Patentblatt 82/37**

(84) Benannte Vertragsstaaten:
**CH DE FR GB IT LI SE**

(71) Anmelder: **Werkzeugmaschinenfabrik Oerlikon-Bührle AG**
**Birchstrasse 155**
**CH-8050 Zürich(CH)**

(72) Erfinder: **Kotthaus, Erich**
**Schmittenackerstrasse 18**
**CH-8304 Wallisellen(CH)**

(54) **Verfahren und Verzahnungsmaschine zur Herstellung von Zahnrädern.**

(57) Bei einem Verfahren zum Herstellen von Zahnrädern mit einem rotierenden Messerkopf (1) wird während einer Einstechbewegung von Messerkopf (1) und Radkörper (4) gegeneinander, vom Messerkopf (1) oder vom Radkörper (4) eine Drehbewegung um einen Drehwinkel α um eine Drehachse ausgeführt. Dies, um eine gleichmässigere Abnützung von Innen- und Aussenschneiden der Messer zu erreichen.

Die zur Durchführung des Verfahrens geeignete Verzahnungsmaschine weist eine Uebertragungseinrichtung auf, zum Uebertragen der Einstechbewegung auf den Antrieb der Werkstück- oder Werkzeugspindel.

FIG. 2

EP 0 059 992 A1

## Verfahren und Verzahnungsmaschine zur Herstellung von Zahnrädern

Die Erfindung betrifft ein Verfahren zur Herstellung von Zahnrädern durch Herausschneiden von Zahnlücken aus einem Radkörper mit einem, um eine Messerkopfachse rotierenden, mit Messern versehenen Messerkopf, wobei Messerkopf und Radkörper eine Einstechbewegung relativ zueinander ausführen, sowie eine zur Durchführung des Verfahrens geeignete Verzahnungsmaschine.

Aus der deutschen Offenlegungsschrift 1 627 357 ist ein Verfahren zur Herstellung bogenverzahnter Kegelräder in einer pausenlosen Arbeitsweise bekannt. Bei diesem Verfahren wird bereits während der Einstechbewegung zwischen Werkzeug und Werkrad das Werkzeug zusätzlich tangential bewegt und zwar im Zwanglauf der Wälzbewegung mit dem Werkrad. Dies in entgegengesetzter Richtung zum späteren Fertigwälzen der Verzahnung. Vorzugsweise haben dabei die Richtungsumkehr der Tangentialbewegung und das Ende der Einstechbewegung am Eingriffsbeginn des Werkrades und der Planverzahnung zusammenzufallen.

Ziel dieses bekannten Verfahrens ist es, die Standhaltigkeit der Messer, sowie die Güte der Oberflächen der Zahnflanken zu verbessern. Dies ist aber mit dem oben genannten Verfahren nur bei der Herstellung von Zahnflanken mit gewälzten Zähnen möglich. Dabei stellt sich das Problem der ungleichen Standhaltigkeit der Innen- bzw. Aussenschneiden, insbesondere bei Verfahren, bei denen Kegelräder mit ungewälzten Zahnflanken durch eine Einstechbewegung erzeugt werden, die, statt senkrecht zur Mantellinie, senkrecht zur Radkörperachse verläuft.

0059992

Die Erfindung, wie sie in den Ansprüchen gekennzeichnet ist, löst die Aufgabe, ein Verfahren zu schaffen, dank dem auch dann, wenn die Zahnflanken nicht gewälzt werden, die Innen- und die Aussenschneiden der Messer gleichmässiger belastet werden.

Die durch die Erfindung erreichten Vorteile bestehen darin, dass die Schneiden derjenigen Messer, die bisher am stärksten beansprucht waren, nun erst nach längeren Zeitabständen nachzuschleifen sind. Somit lassen sich die Verzahnungsmaschinen mit diesem Verfahren wirtschaftlicher betreiben. Dies gilt auch für die Herstellung von Verzahnungen mit ungewälzten Zahnflanken.

Ein Ausführungsbeispiel der Erfindung wird nachstehend anhand der Zeichnungen näher erläutert. Es zeigen:

Fig. 1 und 2    je eine schematische Darstellung eines Einstechvorganges

Fig. 3          eine schematische Darstellung eines Einstech- und Wälzvorganges

Fig. 4          eine schematische Darstellung eines Zerspanungsvorganges nach bekannter Art

Fig. 5          eine schematische Darstellung eines erfindungsgemässen Zerspanungsvorganges

Fig. 6          schematisch einen Teil einer Verzahnungsmaschine

Fig. 7          schematisch ein Getriebsschema einer Verzahnungsmaschine

Fig. 8 und 9   weitere Ausführungen eines
              Getriebeschemas einer
              Verzahnungsmaschine.

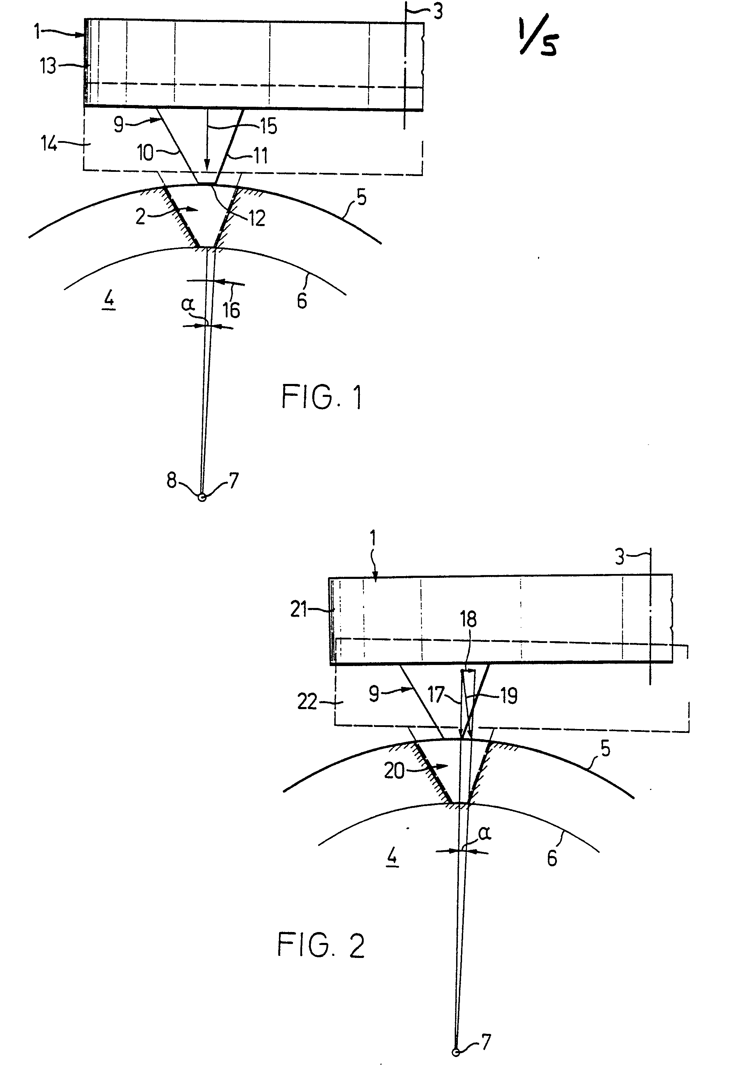

Fig. 1 zeigt vereinfacht dargestellt einen Teil eines Messerkopfes 1, der zum Schneiden von Zahnlücken 2 um eine Messerkopfachse 3, drehbar angeordnet ist. Der Messerkopf 1 ist in bekannter Weise auf der Messerkopfspindel einer an sich bekannten und deshalb nicht näher dargestellen Verzahnungsmaschine befestigt. Ein Radkörper 4 ist in nicht näher dargestellter, aber ebenfalls bekannter Art auf der Werkstückspindel der genannten Verzahnungsmaschine befestigt. Der Radkörper 4 ist vereinfacht und im Schnitt nur durch die beiden Bogenstücke 5 und 6 für die Umfangsfläche bzw. die Begrenzungslinie für die Zahnlückentiefe dargestellt. Eine Radkörperachse 7 schneidet in dieser Darstellung die Zeichnungsebene in einem Punkt 8. Am Messerkopf 1 ist ein Messer 9 sichtbar, von denen in bekannter Weise mehrere am Messerkopf 1 angeordnet sind. Das Messer 9 trägt eine Aussenschneide 10, eine Innenschneide 11 und eine Mittelschneide 12. Diese können ebenfalls je auf einem separaten Messer angeordnet sein. In diesem Falle ist eine Gruppe von Messern vorgesehen, wovon jedes Messer eine Schneide trägt. Diese Messer sind dann hintereinander angeordnet. Die betreffenden Schneiden dieser Messer auf die Schnittebene des Radkörpers 4, welche der Zeichnungsebene entspricht, projiziert, ergeben die Schneiden 10, 11, und 12.

Der Messerkopf 1 mit dem Messer 9 ist in seiner Ausgangsstellung 13 vor dem Einstechen mit ausgezogenen Linien dargestellt. In seiner Endstellung 14, nach dem Einstechen, ist er mit gestrichelten Linien dargestellt.

Pfeile 15 und 16 geben die Bewegungsrichtungen von Messerkopf 1 und Radkörper 4 zueinander während dem Einstechen an.

Fig. 2 zeigt eine Darstellung analog Fig. 1, wobei aber im Gegensatz zu Fig. 1 nicht mehr der Radkörper 4, sondern der Messerkopf 1 die Drehbewegung ausführt. Pfeile 17 und 18 geben die einzelnen Komponenten der Relativbewegung an. Pfeil 19 stellt die resultierende Bewegung dar. Im Radkörper 4 ist somit eine Zahnlücke 20 ersichtlich. Ebenso sind eine Ausgangsstellung 21 und eine Endstellung 22 des Messserkopfes 1 relativ zum Radkörper 4 eingetragen.

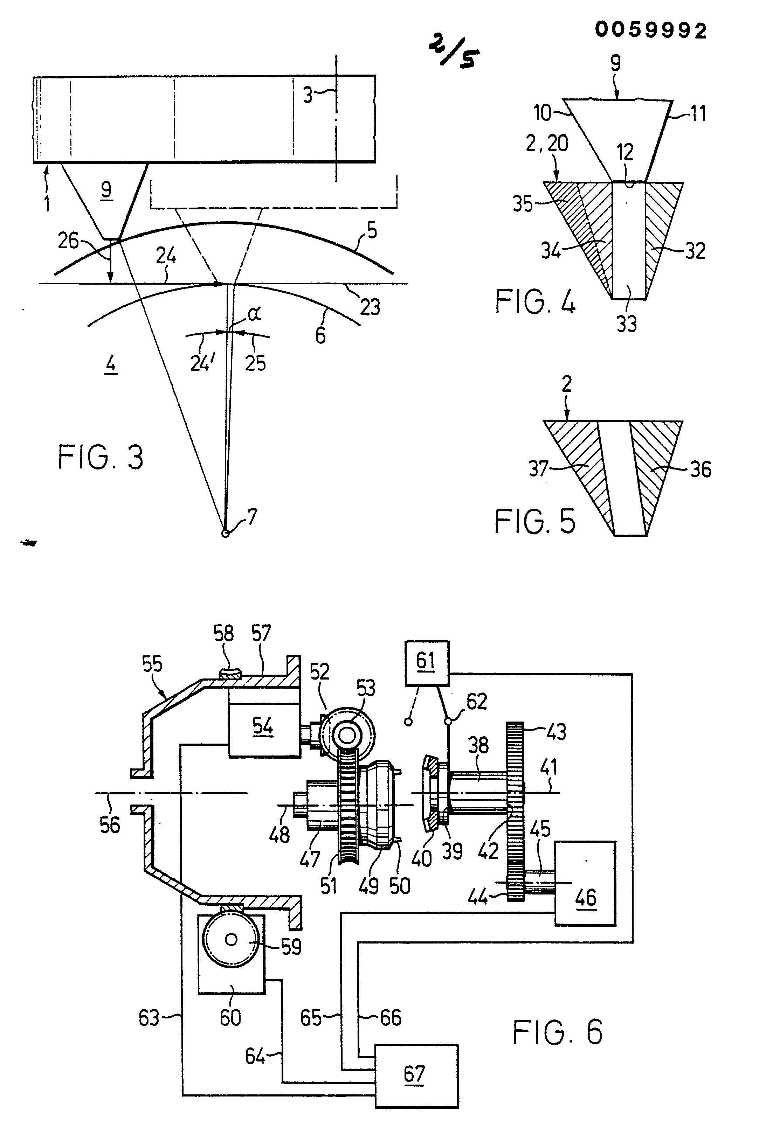

Fig. 3 zeigt eine Darstellung analog Fig. 1 und 2, wobei zwischen Messerkopf 1 und Radkörper 4 folgende Bewegungen auftreten:
Eine durch einen Pfeil 26 dargestellte Einstechbewegung, welche senkrecht zu einer Tangente 23 an das Bogenstück 6 erfolgt . Anschliessend eine Wälzbewegung des Messerkopfes 1, welche durch einen Pfeil 24 dargestellt ist, die entsprechende Wälzbewegung des Radkörpers 4, welche durch einen Pfeil 24' dargestellt ist, und eine zusätzliche Drehbewegung des Radkörpers 4 um einen Winkel $\alpha$, welche durch einen Pfeil 25 dargestellt wird, wobei diese Drehbewegung sich nur der Einstechbewegung überlagert.

In Fig. 4 ist schematisch ein Querschnitt einer Zahnlücke 2·, 20 dargestellt. Dabei wird ein dreieckförmiger Spanquerschnitt 32 durch die Innenschneide 11 des Messers 9, ein rechteckförmiger Spanquerschnitt 33 durch die Mittelschneide 12 und ein grösserer dreieckförmiger Spanquerschnitt 34 durch die Aussenschneide 10 herausgeschnitten.

Dies bei einem üblichen Verfahren zum Herausschneiden von Zahnlücken. Die Aussenschneide 10 hat dabei eine Spanfläche zu erzeugen, die um das Dreieck 35 grösser ist, als die Spanfläche der Innenschneide 11.

In Fig. 5 ist schematisch ein Querschnitt einer Zahnlücke 2 dargestellt, die nach dem erfindungsgemässen Verfahren hergestellt ist. Dabei erzeugen die Innenschneide 11 und die Aussenschneide 10 je gleich grosse Spanquerschnitte 36 und 37.

Wie insbesondere aus den Figuren 1 bis 3 hervorgeht, besteht das erfindungsgemässe Verfahren darin, dem Messerkopf 1 oder dem Radkörper 4 eine Drehung um einen kleinen Drehwinkel $\alpha$ so zu erteilen, dass die Innenschneide 11 und die Aussenschneide 12 je ungefähr gleich grosse Spanquerschnitte 36 und 37 (gemäss Fig. 5) herausschneiden.

In Fig. 6 sind in einer schematischen Darstellung Elemente einer Verzahnungsmaschine zu erkennen. Eine Werkstückspindel 38, welche am einen Ende 39 einen zu verzahnenden Radkörper 40 trägt, ist in nicht näher dargestellter, aber bekannter Art um eine Werkstückspindelachse 41 drehbar gelagert. Am anderen Ende 42 der Werkstückspindel 38 ist beispielsweise ein Zahnrad 43 befestigt, welches mit einem Zahnrad 44 kämmt. Dieses ist auf einer Ausgangswelle 45 eines Antriebsmotors 46 festgemacht.

Ferner ist auf einer Werkzeugspindel 47, welche ebenfalls in bekannter und deshalb nicht näher dargestellter Art um eine Werkzeugspindelachse 48 drehbar gelagert ist, ein Messerkopf 49 mit Messern 50 befestigt.

Die Werkzeugspindel 47 wird über ein Schneckenrad 51, welches über ein Kegelgetriebe 52 und eine Schnecke 53 von einem weiteren Antriebsmotor 54 angetrieben ist, angetrieben. Der Antriebsmotor 54, wie auch die Werkzeugspindel 47 sind in einer Wälztrommel 55 gelagert.

Die Wälztrommel 55 ist in bekannter Art um eine Wälztrommelachse 56 drehbar gelagert. An ihrem Umfang 57 ist die Wälztrommel 55 von einem Schneckenrad 58 umgeben, welches über eine Schnecke 59 von einem Antriebsmotor 60 angetrieben wird.

Zum Erfassen der Einstechbewegung von Messerkopf 49 und Radkörper 40 gegeneinander, ist ein Tastgerät 61 (z.B. ein Potentiometer) vorgesehen, das beispielsweise über einen Gelenkhebel 62 mit der Werkstückspindel 38 verbunden ist. Das Tastgerät 61 ist beispielsweise in nicht näher dargestellter Weise am Maschinenbett befestigt. Leitungen 63, 64, 65 und 66 verbinden die Antriebsmotoren 46, 54 und 60, sowie das Tastgerät 61 mit einer elektrischen Steuereinrichtung 67.

Bei einer Verzahnungsmaschine, die keine gewälzten Zahnräder herstellen soll, ist die Wälztrommel 55 fest, bzw. durch einen festen Rahmen ersetzt. Entsprechend fehlt ein Antriebsmotor 60 und die Leitung 64.

Im Betrieb wird die Einstechbewegung, welche über den Gelenkhebel 62 in das Tastgerät 61 übertragen wird, im Tastgerät 61 in ein elektrisches Signal umgewandelt und über Leitung 66 in die Steuereinrichtung 67 eingegeben. Von dort aus wird nun der Antriebsmotor 46 bzw. 60 so gesteuert, dass die Verdrehung um einen Drehwinkel während dem Einstechvorgang erfolgt. Gelenkhebel 62, Tastgerät 61 sowie die elektrische Leitung 66 bilden zusammen eine Uebertragungseinrichtung für die Einstechbewegung. Je nach Steuerung der Spindelantriebe 46 und 54 lässt sich so im Einzelteilverfahren oder im pausenlosen Verfahren verzahnen.

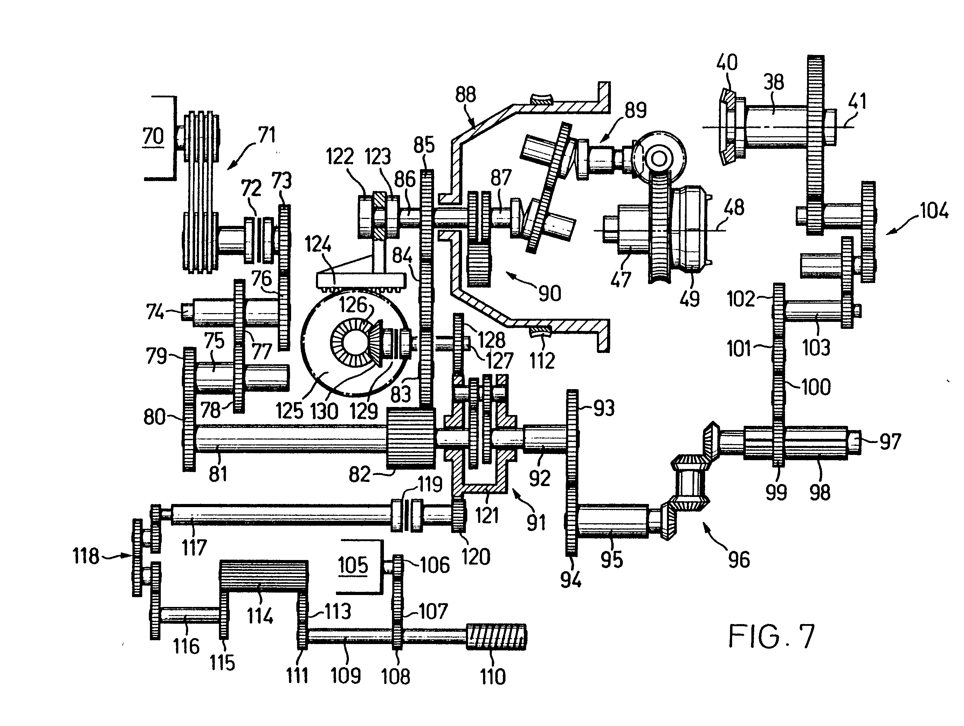

Aus Fig. 7 ist ein Getriebeschema einer weiteren Ausführung einer erfindungsgemässen Verzahnungsmaschine ersichtlich. Dabei erkennt man einen Antriebsmotor 70, der
über ein Riemengetriebe 71 und eine Kupplung 72 ein
Stirnrad 73 antreibt. Dieses treibt weitere, auf Wellen
74 und 75 gelagerte Stirnräder 76, 77, 78 und 79. Dieses
wiederum treibt über ein Stirnrad 80 eine Hauptantriebswelle 81 an. Auf dieser sitzt ein breites Stirnrad 82,
welches weitere Stirnräder 83, 84, und 85 antreibt.
Stirnrad 85 ist auf einer Welle 86 angeordnet, die koaxial zur Drehachse 87 einer Wälztrommel 88 verläuft. In
dieser ist in an sich bekannter Weise ein Antriebsstrang
89 für eine Werkzeugspindel 47 untergebracht. Diese ist
um eine Werkzeugspindelachse 48 drehbar gelagert. Die
Werkzeugspindel 47 trägt in bekannter Weise einen Messerkopf 49. Der Antriebsstrang 89 bildet zusammen mit
den Stirnrädern 83, 84 und 85 einen Werkzeugspindelantrieb 90.

Die Hauptspindelantriebswelle 81  mündet mit dem einen
Ende in ein Umlaufrädergetriebe 91. Ebenfalls in das Umlaufrädergetriebe 91 mündet mit einem Ende eine Welle
92, an deren anderem Ende ein Stirnrad 93 sitzt. Dieses
kämmt mit einem Stirnrad 94, welches auf einer Welle 95
sitzt. Ein Kegelgetriebe 96 verbindet die Welle 95 mit
einer Welle 97, auf welcher auf einer Verzahnung 98 verschiebbar ein weiteres Stirnrad 99 sitzt. Dieses kämmt
mit einem Stirnrad 100 , welches über ein Stirnrad 101
ein Stirnrad 102 treibt, das auf einer Welle 103 sitzt.
Zwischen der Welle 103 und der Werkstückspindel 38 ist
ein an sich bekanntes Wechselrädergetriebe 104 geschaltet. Man erkennt hier ebenfalls die
Werkstückspindelachse 41 und den Radkörper 40.

Zum Antreiben der Wälztrommel 88 ist ein weiterer Antriebsmotor 105 angeordnet, der über Stirnräder 106, 107
und 108 eine Welle 109 treibt. Am einen Ende trägt die
Welle 109 eine Schnecke 110, am anderen Ende ein Stirnrad 111. Die Schnecke 110 treibt ein Schneckenrad 112,
das die Wälztrommel 88 umgibt. Ueber Stirnräder 113, 114
und 115 wird eine Welle 116 angetrieben. Zwischen dieser
und einer Welle 117 ist ein weiteres Wechselrädergetriebe 118 angeordnet. Auf der Welle 117 ist eine Kupplung
119 angeordnet. Ein Stirnrad 120 am Ende der Welle 117
kämmt mit einem Planetenradträger 121 des Umlaufrädargetriebes 91.

Mit der Wälztrommel 88 bezw. der Welle 86 ist, zwischen
Flanschen 122 und 123 geführt, eine Zahnstange 124 angeordnet. Diese kämmt mit einem Stirnrad 125, welches
gleichachsig mit einem Kegelrad 126 angeordnet ist. Auf
einer Welle 127 ist verschiebbar ein Stirnrad 128, sowie
eine Kupplung 129 und ein Kegelrad 130 angeordnet, das
mit dem Kegelrad 126 im Eingriff ist. Das Stirnrad 128
kämmt ebenfalls mit dem Planetenradträger 121. Die Flansche 122 und 123, die Zahnstange 124, die Stirnräder 125
und 128 sowie die Kegelräder 126 und 130 bilden mit der
Kupplung 129 die Uebertragungseinrichtung.

Zum Schneiden der Zahnlücken werden in an sich bekannter
und hier nicht näher dargestellter Weise die Werkstückspindel 38 und die Werkzeugspindel 47 so einander gegenübergestellt, dass der Einstechvorgang beginnen kann.
Die Kupplung 129 wird ein-, die Kupplung 119 ausgeschaltet. Dann wird der Antriebsmotor 70 und der hier nicht
näher dargestellte, aber bekannte Antrieb für den Vorschub der Werkzeugspindel 47 eingeschaltet.

Dadurch wird die Zahnstange 124 in Fig. 7 nach rechts verschoben und das Stirnrad 125, die Kegelräder 126 und 130 sowie das Stirnrad 128 drehen sich langsam. Somit dreht auch der Planetenradträger 121, wodurch sich eine geringe Veränderung der Drehzahl der Werkstückspindel 38 ergibt. Diese geringe Veränderung des Drehzahlverhältnisses der Werkstückspindel 38 und der Werkzeugspindel 47 ergibt bei einem pausenlosen Schneidverfahren die Verdrehung um einen Drehwinkel $\alpha$. Auch bei einem Einzelteilverfahren lässt sich so die im Prinzip während dem Einstechen stillstehende Werkzeugspindel 38 geringfügig verdrehen. Zum anschliessenden Wälzen der Zahnflanken wird die Kupplung 129 ausgeschaltet und die Kupplung 119 wieder eingeschaltet.

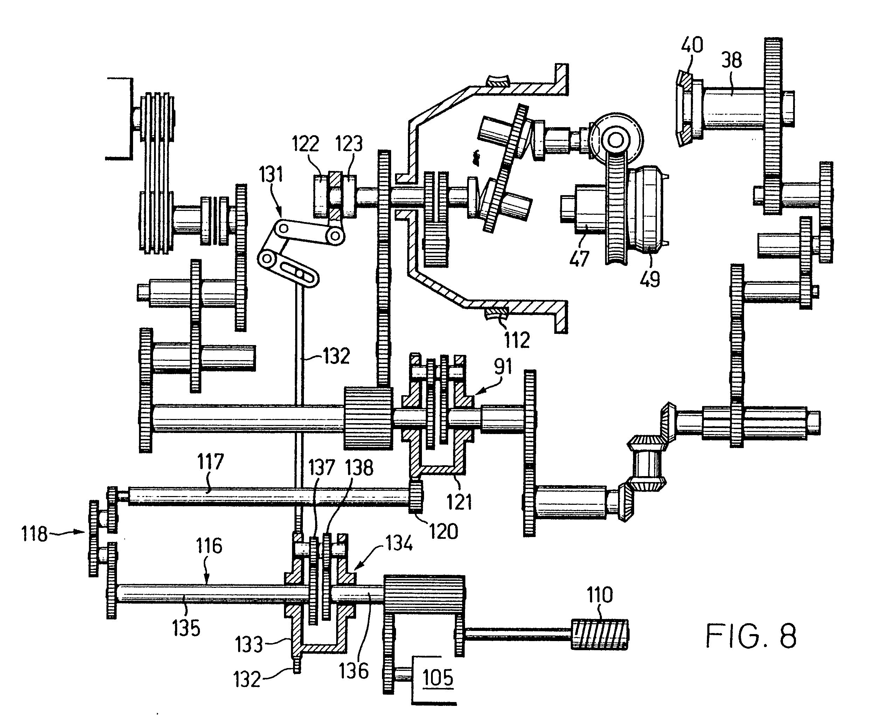

Das Getriebeschema einer Verzahnungsmaschine gemäss Fig. 8 ist im Wesentlichen gleich wie dasjenige gemäss Figur 7. Hier wird aber die Einstechbewegung über ein Hebelgetriebe 131 auf eine Zahnstange 132 übertragen, die wiederum in einen Planetenradträger 133 eines Umlaufrädergetriebes 134 eingreift. Das Umlaufrädergetriebe 134 teilt die aus Fig. 7 bekannte Welle 116 in zwei Abschnitte 135 und 136. Die Kupplung 119 ist bei dieser Ausführung nicht notwendig.

Während dem Einstechen wird auf diese Weise die Zahnstange 132 nach oben bewegt und somit der Planetenradträger 133 des Umlaufrädergetriebes 134 in eine langsame Drehung versetzt. Da die Planetenräder 137 und 138 unter sich verschiedene Durchmesser aufweisen, wird durch die langsame Drehung des Planetenradträgers 133 der Abschnitt 135 der Welle 116 auch bei stillstehendem Antriebsmotor 105 bewegt.

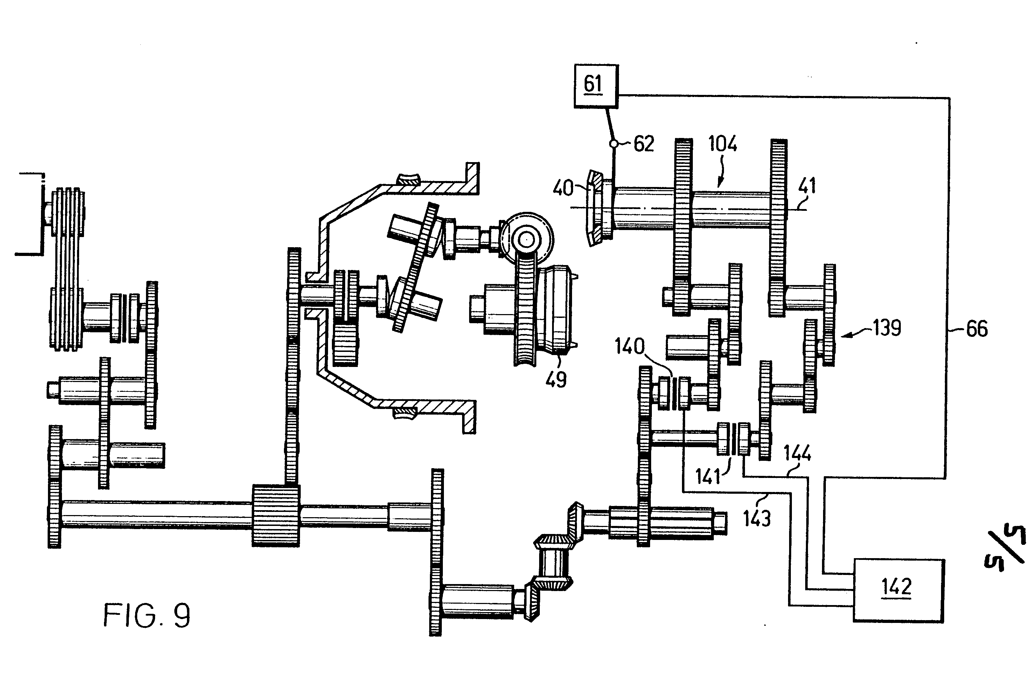

Ueber das Wechselrädergetriebe 118, die Welle 117 und das Stirnrad 120 wird der Planetenradträger 121 ebenfalls langsam bewegt, was dieselbe Wirkung erbringt, wie die Anordnung gemäss Fig. 7. Fig. 9 zeigt eine weitere Ausführung eines Getriebschemas für eine Verzahnungsmaschine. Dabei ist dem Wechselrädergetriebe 104 ein weiteres Wechselrädergetriebe 139 mit geringfügig verändertem Uebersetzungsverhältnis parallel geschaltet. Durch Kupplungen 140 und 141 ist das eine oder das andere Wechselrädergetriebe 104, bzw. 139 zu-, respektive wegschaltbar.

Zu Beginn des Einstechens muss vom Wechselrädergetriebe 104 durch Lösen der Kupplung 140 und Einschalten der Kupplung 141 auf das Wechselrädergetriebe 139 umgeschaltet werden. Auf diese Weise wird eine leichte Verdrehung des Radkörpers 40 um die Werkstückspindelachse 41 erreicht.

Auch hier wird die Einstechbewegung analog Fig. 6 durch ein Tastgerät 61 überwacht. Das Ein- und Ausschalten der Kupplungen 140 und 141 besorgt eine Steuereinheit 142, welche über Leitungen 143 und 144 mit den Kupplungen 140 und 141, die in diesem Falle elektrisch betätigbar sind, verbunden ist. Die bereits bekannte Leitung 66 verbindet das Tastgerät 61 mit der Steuereinheit 142. Die Uebertragungseinrichtung umfasst das Tastgerät 61, die Leitung 66 und die Steuereinheit 142.

Patentansprüche

1. Verfahren zur Herstellung von Zahnrädern durch Herausschneiden von Zahnlücken (2,20) aus einem Radkörper (4) mit einem, um eine Messerkopfachse (3) rotierenden, mit Messern (9) versehenen Messerkopf (1), wobei Messerkopf (1) und Radkörper (4) eine Einstechbewegung relativ zueinander ausführen, dadurch gekennzeichnet, dass Radkörper (4) und Messerkopf (1) während der Einstechbewegung relativ zueinander eine Drehbewegung um einen Drehwinkel $\alpha$ um eine Drehachse ausführen.

2. Verfahren gemäss Anspruch 1, dadurch gekennzeichnet, dass die Drehachse einer Radkörperachse (7) entspricht.

3. Verfahren gemäss Anspruch 1, dadurch gekennzeichnet, dass die Drehbewegung spätestens dann endet, wenn die Messer (9) volle Zahnlückentiefe erreicht haben.

4. Verfahren gemäss Anspruch 1, dadurch gekennzeichnet, dass der Radkörper (4) die Drehbewegung um den Drehwinkel $\alpha$ ausführt.

5. Verfahren gemäss Anspruch 1, dadurch gekennzeichnewt, dass der Messerkopf (1) die Drehbewegung um den Drehwinkel $\alpha$ ausführt.

6. Verfahren gemäss Anspruch 1, wobei die Zahnräder in einem kontinuierlichen Verfahren hergestellt werden, dadurch gekennzeichnet, dass die Drehbewegung um den Drehwinkel $\alpha$ sich der kontinuierlichen Drehung des Radkörpers (4) überlagert.

7. Verzahnungsmaschine zur Durchführung des Verfahrens gemäss Anspruch 1, mit einem Antrieb für eine Werkzeugspindel (47) und einem Antrieb für eine Werkstückspindel (38), gekennzeichnet durch eine Uebertragungseinrichtung zum Uebertragen der Einstechbewegung auf den Antrieb einer der Spindeln (38,47).

8. Verzahnungsmaschine gemäss Anspruch 7, dadurch gekennzeichnet, dass die Uebertragungseinrichtung ein Tastgerät (61), welches eine Einstechbewegung in ein elektrisches Signal umwandelt, sowie eine elektrische Leitung (66) als Verbindung mit einer Steuereinrichtung (67) für Antriebsmotoren (46,54), umfasst.

9. Verzahnungsmaschine gemäss Anspruch 7, dadurch gekennzeichnet, dass die Uebertragungseinrichtung einen Getriebezug (124, 125, 126, 130, 128) umfasst, der zwischen einem Planetenträger (121) eines dem Antrieb für die Werkstückspindel (38) zugeordneten Umlaufrädergetriebes (91) und der Werkzeugspindel (90) angeordnet ist.

10. Verzahnungsmaschine gemäss Anspruch 7, dadurch gekennzeichnet, dass die Uebertragungseinrichtung ein mit der Werkzeugspindel (47) verbundenes Hebelgetriebe (131, 132) sowie ein in den Wälztrommelantrieb eingeschaltetes und mit dem Hebelgetriebe gekoppeltes Umlaufrädergetriebe (134) umfasst.

11. Verzahnungsmaschine gemäss Anspruch 7, dadurch gekennzeichnet, dass die Uebertragungseinrichtung ein Tastgerät (61) sowie eine elektrische Leitung (66) als Verbindung mit einer Steuereinheit (142) zum Steuern von Kupplungen (140,141), umfasst.

FIG. 1

FIG. 2

0059992

1/5

0059992

2/5

FIG. 3

FIG. 4

FIG. 5

FIG. 6

FIG. 7

FIG. 8

FIG. 9

Europäisches
Patentamt

**EUROPÄISCHER RECHERCHENBERICHT**

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| X | CH-A- 432 984 (GLEASON)<br>* Spalte 8, Zeile 51 - Spalte 9, Zeile 4; Figuren * | 1 | B 23 F 9/10 |
|  | --- |  |  |
| X | FR-A-1 449 486 (PICANOL)<br>* Seite 6, rechte Spalte, Zeile 50 - Seite 7, linke Spalte, Zeile 17; Figuren * | 1 |  |
|  | --- |  |  |
| A | DE-A-1 552 742 (GLEASON) | 1 |  |
|  | --- |  |  |
| A | US-A-3 915 060 (KOGA) | 1 |  |
|  | --- |  |  |
| A | CH-A- 590 105 (OERLIKON) | 1 |  |
|  | --- |  |  |
| A | DE-A-1 627 358 (KLINGELNBERG) | 1 | **RECHERCHIERTE SACHGEBIETE (Int. Cl. ³)** |
|  | ----- |  | B 23 F 9/00 |

Der vorliegende Recherchenbericht wurde für alle Patentansprüche erstellt.

| Recherchenort<br>DEN HAAG | Abschlußdatum der Recherche<br>01-06-1982 | Prüfer<br>HORVATH R.C. |
|---|---|---|